# EUROPÄISCHE PATENTSCHRIFT

(11) **EP 1 232 014 B1**
(45) Veröffentlichungstag und Bekanntmachung des Hinweises auf die Patenterteilung: **02.05.2003**
(21) Anmeldenummer: 00988629.2
(22) Anmeldetag: 17.11.2000
(51) Int. Cl.: B03C 7/00

(54) **VERFAHREN UND VORRICHTUNG ZUM TRENNEN VON KUNSTSTOFFEN**
METHOD AND DEVICE FOR SEPARATING PLASTICS
PROCEDE ET DISPOSITIF DE SEPARATION DE MATIERES SYNTHETIQUES

(30) Priorität: 18.11.1999 DE 19955697
(43) Veröffentlichungstag der Anmeldung: 21.08.2002
(73) Patentinhaber: Schreiter, Klaus, 81675 München (DE); Draesel, Dieter, 85560 Ebersberg (DE)
(72) Erfinder: REITMEIR, Andreas, A-6108 Scharnitz (AT)
(74) Vertreter: Verscht, Thomas K.
(86) Internationale Anmeldenummer: DE0004078
(87) Internationale Veröffentlichungsnummer: WO01036101

(56) Entgegenhaltungen:
- FR-A- 2 723 865
- US-A- 5 289 922
- US-A- 5 366 091

## Beschreibung

Die vorliegende Erfindung betrifft ein Verfahren zum Trennen eines Kunststoffgemisches, welches eine Vielzahl unterschiedlicher Kunststoffarten aufweist, durch eine kontaktelektrische Vorbehandlung gemäß dem Oberbegriff des Patentanspruchs 1. Ferner betrifft die vorliegende Erfindung eine entsprechende Vorrichtung gemäß dem Oberbegriff des Patentanspruchs 13.

Aufgrund der großen Anzahl von, aus unterschiedlichen Kunststoffsorten hergestellten Produkten stellt das Recycling von Kunststoffen ein großes ökologisches Problem dar. Aber auch aus ökonomischen Gründen wäre es wünschenswert, die einzelnen Kunststoffarten in möglichst reiner Form wieder zu gewinnen. Die Trennung einzelner Kunststoffsorten aus einem Gemisch von Kunststoffen stellt in Praxis ein äußerst schwierig zu lösendes Problem dar. Neben der Reduzierung der Kosten für die Herstellung und den Betrieb einer entsprechenden Recyclinganlage besteht eine Hauptschwierigkeit darin, die einzelnen Kunststoffsorten in entsprechender Reinheit wiederzugewinnen. Deshalb wurden im Stand der Technik verschiedene Verfahren zur Trennung von Kunststoffen vorgeschlagen. Als Beispiel sei auf die Patentschrift US-A-5,183,212 verwiesen, aus welcher ein Verfahren zum Trennen und Wiedergewinnen von wenigstens zwei Komponenten von Vielschicht-Kunststoffen offenbart ist. Dabei werden die Vielschicht-Kunststoffe in kleinere Teilchen zerteilt, wobei die Trennung aufgrund der Inkompatibilität der unterschiedlichen Kunststoffarten und der unterschiedlichen Schmelztemperaturen beruht. Dabei ist die Schmelztemperatur, diejenige Temperatur, bei der sich das Material erweicht, klebrig wird, und dazu neigt aneinander zu haften. Gemäß dem aus dieser Patentschrift offenbarten Verfahren haften gleichartige Teilchen aneinander und sammeln sich somit an.

Demgegenüber besteht die Aufgabe der vorliegenden Erfindung darin, ein Verfahren und eine Vorrichtung zum Trennen eines Kunststoffgemisches anzugeben bzw. zu schaffen, welches sowohl die ökologische als auch die ökonomische Effizienz gegenüber dem Stand der Technik weiter erhöht, und bei welchem der Reinheitsgrad einer Trennung weiter verbessert werden kann.

Diese erfindungsgemäße Aufgabe wird bei einem Verfahren bzw. einer Vorrichtung der eingangs genannten dadurch gelöst, daß eine vorbestimmte Kunststoffart mit dem Kunststoffgemisch in Kontakt gebracht wird, wobei das Kunststoffgemisch derart behandelt wird, das eine erste Gruppe von Kunststoffen des Kunststoffgemisches im wesentlichen positiv aufgeladen wird, eine zweite Gruppe von Kunststoffen des Kunststoffgemisches im wesentlichen negativ aufgeladen wird und eine dritte Gruppe von Kunststoffen des Kunststoffgemisches im wesentlichen ungeladen ist, wobei die dritte Gruppe von Kunststoffen im wesentlichen die vorbestimmte Kunststoffart aufweist. Die entsprechenden Gruppen können insoweit auch wegfallen, wenn das Gemisch nur entsprechend wenig unterschiedliche Kunststoffe aufweist.

Vorzugsweise ist zur Durchführung ein Trennwerkzeug zur Trennung von Teilchen des Kunststoffgemisches vorgesehen, wobei das Trennwerkzeug aus der vorbestimmten Kunststoffart hergestellt ist. Ferner ist bevorzugt, daß die Oberfläche des Trennwerkzeugs, welches mit den Teilchen des Kunststoffs in Kontakt gebracht wird, groß im Vergleich zu der Oberfläche eines Teilchens des Kunststoffgemisches ist. Dabei wird unter dem Ausdruck "Trennwerkzeug" grundsätzlich jedes zur Durchführung des erfindungsgemäßen Verfahrens geeignete Gerät verstanden, z. B. eine Bürste, eine Bürsten/Schalen-Kombination, ein Rührwerk usw. Bevorzugt sind allerdings solche "Trennwerkzeuge", mit denen es gelingt, das Teilchengemisch zu durchdringen bzw. zu trennen, da auf diese Weise der zur Durchführung des erfindungsgemäßen Verfahrens erforderliche Kontakt verbessert wird.

Vorteilhafterweise ist zur Auswertung der ersten und zweiten Gruppen von Kunststoffen eine Wertetabelle vorgesehen, welche in Abhängigkeit von der vorbestimmten Kunststoffart, diejenigen Kunststoffarten, welche sich durch die Vorbehandlung im wesentlichen positiv aufladen, und diejenigen Kunststoffarten, welche sich durch die Vorbehandlung im wesentlichen negativ aufladen, aufweist.

Dabei ist bevorzugt, daß die Wertetabelle als Rangordnung ausgebildet ist, welche die Kunststoffarten nach einer Wertigkeitsfunktion anordnet, wobei die Wertigkeitsfunktion die relative Permittivitätszahl und die Dichte aufweist. Selbstverständlich kann die Wertigkeitsfunktion auch weitere Parameter aufweisen, wie z. B. die Luftfeuchtigkeit, Temperatur oder die Zusammensetzung des Eingangsmaterials u.s.w. Dabei entspricht die Permittivität der Dielektrizitätszahl oder Dielektrizitätskonstante.

Vorzugsweise ist die Wertigkeitsfunktion die (relative) Permittivitätszahl oder Dielektrizitätszahl minus die Dichte in g/cm³. Es wurde experimentell herausgefunden, daß diese einfache Wertigkeitsfunktion oder Kennzahl für eine in der Praxis ausreichende Trennung sorgt.

Vorteilhafterweise ist die Kennzahl derart, daß sich diejenigen Kunststoffarten durch die Vorbehandlung im wesentlichen negativ aufladen, deren Kennzahl gebildet aus relativer Permittivitätszahl minus die Dichte in g/cm³ kleiner als der entsprechende Wert der vorbestimmten Kunststoffart ist, und sich diejenigen Kunststoffarten durch die Vorbehandlung im wesentlichen positiv aufladen, deren Kennzahl gebildet aus relativer Permittivitätszahl minus die Dichte in g/cm³ größer als der entsprechende Wert der vorbestimmten Kunststoffart ist. Es sei an dieser Stelle explizit bemerkt, daß gemäß der vorliegenden Erfindung sowohl das allgemeine Konzept einer Wertigkeitsfunktion, insbesondere der oben angegebenen, als auch die vorhersagbare Aufladung jeder einzelnen Kunststoffart in Abhängigkeit von dem Kontakt mit jeder einzelnen, vorbestimmten Kunststoffart, geschützt werden soll.

Zur weiteren Erhöhung des Reinheitsgrades wird das Verfahren mehrfach mit der gleichen vorbestimmten Kunststoffart durchgeführt. Dabei kann zwischen den Wiederholungsschritten eine tatsächliche Trennung und/oder Neutralisierung des Ladungszustands beispielsweise durch eine an sich bekannte Fallabscheidertechnologie durchgeführt werden.

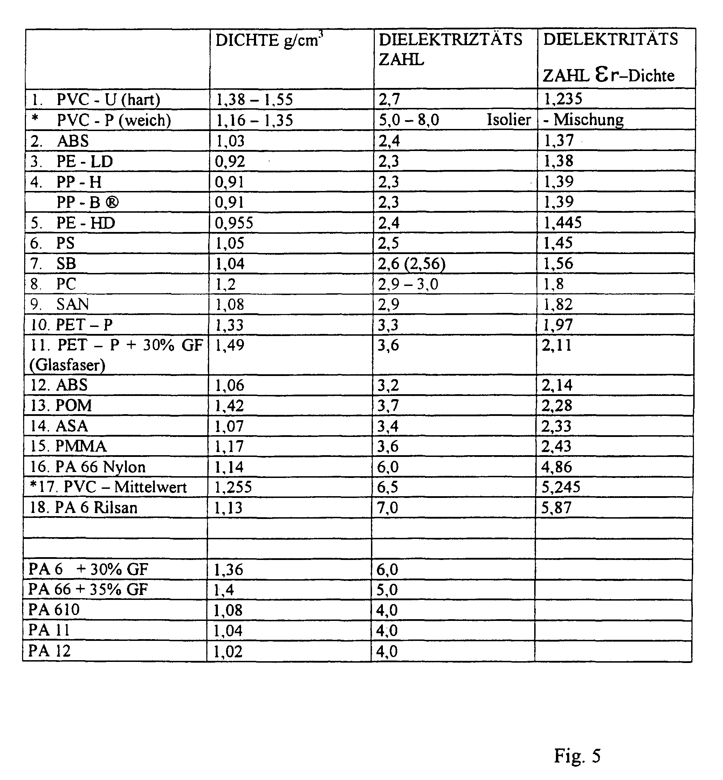

Zur Trennung eines Gemisches mit einer Vielzahl von unterschiedlichen Kunststoffsorten ist bevorzugt, daß das Verfahren mehrfach mit unterschiedlichen vorbestimmten Kunststoffarten durchgeführt wird. Dabei sind vorzugsweise die vorbestimmten Kunststoffarten diejenigen, welche in dem Gemisch am häufigsten auftreten oder für die Wiedergewinnung besonders wertvoll sind. Ebenfalls können die vorbestimmten Kunststoffarten auch im Hinblick auf die Identifizierung der Kunststoffarten gemäß der in Fig. 5 dargestellten Tabelle ausgewählt werden, so daß die Kunststoffsorten schrittweise nach und nach identifiziert werden können.

Vorzugsweise weist das Kunststoffgemisch gemahlene Teilchen mit Korngrößen von wenigen Millimetern auf. Es hat sich herausgestellt, daß gemäß dieser Variante der Erfindung die Erfindung besonders gut realisierbar ist.

Vorzugsweise wird das Kunststoffgemisch vor der kontaktelektrischen Behandlung gebürstet. Dadurch wird eine Reinigung der Kunststoffpartikel, insbesondere von Schmutz oder Staub, erreicht. Ferner werden dadurch u. U. vorhandene antistatische Beschichtungen, welche das erfindungsgemäße Verfahren beeinträchtigen können entfernt. Die Aufrauhung hat sich aber auch zur Erhöhung des reibungselektrischen Effekts bewährt.

Vorteilhafterweise wird das Kunststoffgemisch vor der kontaktelektrischen Behandlung getrocknet. Feuchtigkeit ist nämlich für den kontaktelektrischen Teil des Verfahrens besonders schädlich und führt zu einer Nichtvorhersagbarkeit des Ladungsergebnisses bzw. zu einer ungenügenden statischen Aufladung.

In vorrichtungstechnischer Hinsicht ist bevorzugt, daß die Vorrichtung wenigstens eine Anordnung aus einer in einer Schale angeordneten Bürsteinrichtung aufweist, wobei die Schale und die Bürsteinrichtung aus der vorbestimmten Kunststoffart hergestellt ist. Alternativ dazu kann die kontaktelektrische Vorbehandlung auch anders, z. B. durch einen Rührvorgang oder einen Zyklon, realisiert werden. Allerdings ist die Verwendung einer Bürsten-/Schalen-Kombination besonders effektiv, was vermutlich daran liegt, daß die Kontaktflächen besonders groß sind und durch die Borsten die Kunststoffteilchen besonders gut voneinander abgeschirmt werden.

Weiter bevorzugte Ausführungsformen der Erfindung ergeben sich aus den abhängigen Patentansprüchen.

Die Erfindung, sowie weitere Merkmale, Ziele, Vorteile und Anwendungsmöglichkeiten derselben wird bzw. werden nachfolgend anhand einer Beschreibung von bevorzugten Ausführungsbeispielen unter Bezugnahme auf die beigefügten Zeichnungen näher erläutert. Überall in den Zeichnungen bezeichnen dieselben oder ähnliche Bezugszeichen die selben bzw. entsprechende Elemente. Dabei bilden alle beschriebenen und/oder bildlich dargestellte Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigen:
- Fig. 1: eine stark schematische Darstellung von Anlagenteilen bzw. Prozeßstufen für eine erfindungsgemäße Anlage zur Kunststoffwiederaufbereitung;
- Fig. 2: eine stark schematische Querschnittsansicht zur Erläuterung des Anlagenteils bzw. der Prozeßstufe der Schwergutabscheidung;
- Fig.: 3a eine stark schematische Querschnittsansicht des Anlagenteils bzw. der Prozeßstufe der Trockenreinigung;
- Fig.: 3b eine stark schematische Längsschnittsansicht des Anlagenteils bzw. der Prozeßstufe der Trockenreinigung gemäß Fig. 3a;
- Fig. 4: eine stark schematische Längsschnittansicht des Anlagenteils bzw. der Prozesßstufe der kontaktelektrischen Vorbehandlung; und
- Fig. 5: eine Tabelle zur Erläuterung des Effekts der kontaktelektrischen Vorbehandlung gemäß Fig. 4 auf unterschiedliche Kunststoffarten bzw. einer tribologischen Kennzahl.

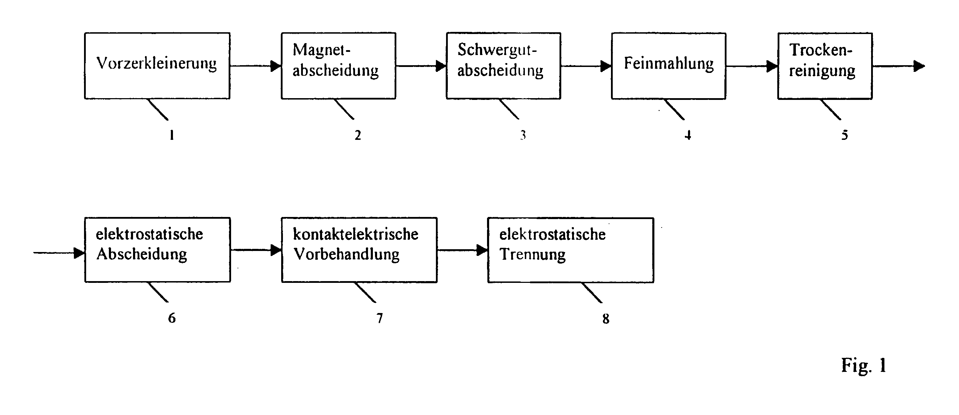

In Fig. 1 ist in stark schematischer Darstellung die Abfolge von verschiedenen Prozeßstufen bzw. die Anordnung von verschiedenen Anlageteilen für ein erfindungsgemäße trockene Kunststoffrecyclinganlage dargestellt. Das Eingangsmaterial für die Anlage kann eine Vielzahl von unterschiedlichen Zusammensetzungen haben, und ist vorzugsweise Müllmaterial, wie z. B. Hausmüll, oder auch lose oder in Ballen gepreßte Altkunststoffe. Das Eingangsmaterial kann verunreinigt, feucht oder naß sein. Ferner können dem Eingangsmaterial Fremdstoffe beigemengt sein, die bei der normalen Abfallsortierung oder -sammlung anfallen. Vorzugsweise sind gefährliche Müllstoffe oder Sondermüll, wie zum Beispiel Giftstoffe und explosive Stoffe oder dergleichen, in dem Eingangsmaterial nicht vorhanden beziehungsweise vorher entfernt worden.

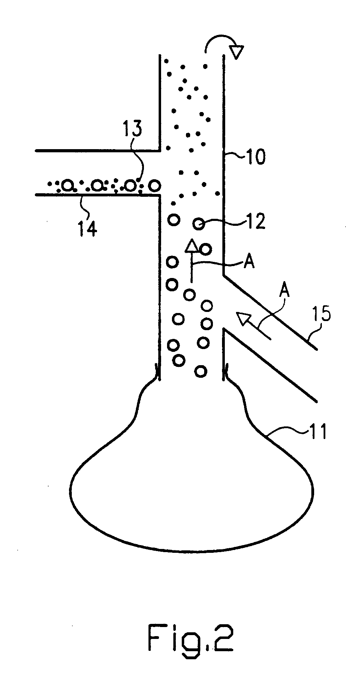

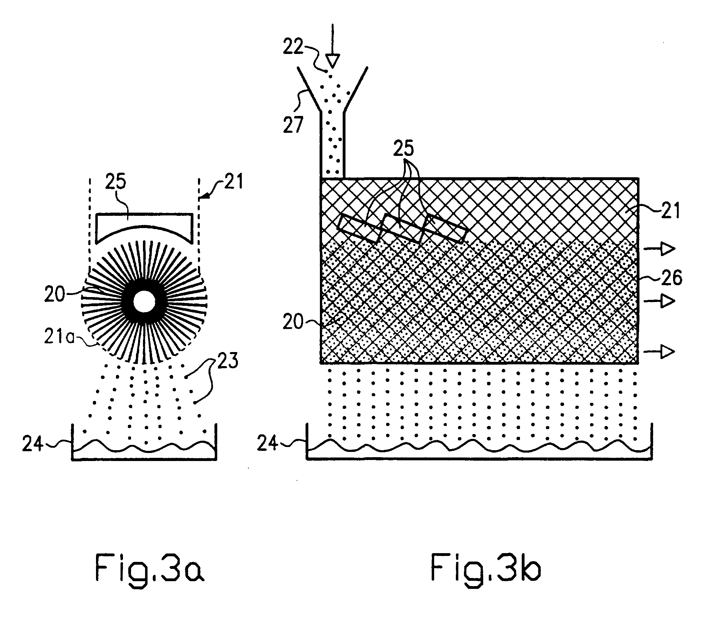

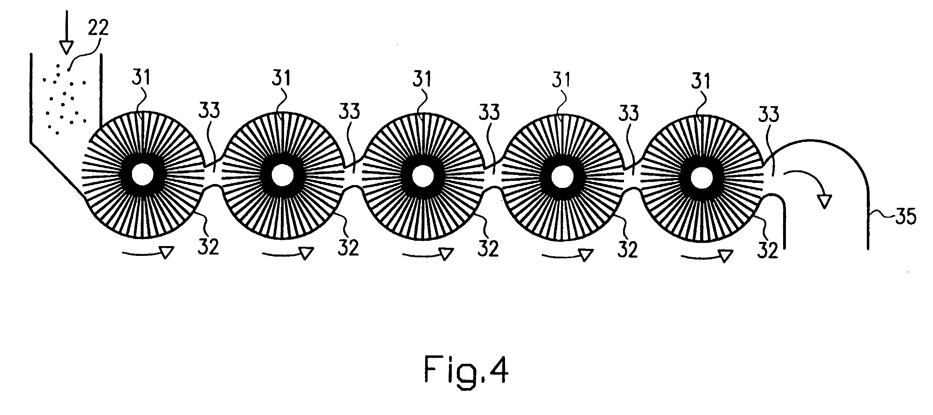

Der Fig. 1 entnimmt man, daß in einem Schritt 1 eine Vorzerkleinerung des Eingangsmaterials durchgeführt wird. Die Vorzerkleinerung 1 kann dabei ein- oder mehrstufig, insbesondere zweistufig, erfolgen. Vorzugsweise besitzt das Material nach dem Schritt 1 der Vorzerkleinerung eine Korngröße von etwa 20 Millimetern. Anschließend wird in einem Schritt 2 eine Magnetabscheidung durchgeführt. In dem Schritt 2 wird zur Abscheidung von magnetischen Teilchen, insbesondere Eisenteilchen, das Material in die Nähe eines Magneten gebracht, wobei die magnetischen Partikel durch die Anziehung an dem Magnet haften bleiben. Anstelle der Darstellung der Fig. 1 kann der Schritt 2 der Magnetabscheidung auch zwischen mehreren Stufen der Vorzerkleinerung gemäß Schritt 1 durchgeführt werden. Ein Schritt 3 ist zur Schwergutabscheidung vorgesehen. In dem Schritt 3 der Schwergutabscheidung werden alle Nicht-Eisenmetalle, Glas und dergleichen abgeschieden. Weitere Einzelheiten des Schritts 3 zur Schwergutabscheidung werden in Zusammenhang mit der Fig. 2 und der zugehörigen Beschreibung im folgenden näher erläutert. In einem Schritt 4 werden die nach der Schwergutabscheidung ausgeblasenen leichten Teile, welche vornehmlich Kunststoffteilchen sind, auf eine Korngröße von wenigen Millimetern, vorzugsweise zwischen etwa vier und etwa sechs Millimetern, feingemahlen. Anschließend wird in einen Schritt 5 eine Trockenreinigung durchgeführt. Für weitere Einzelheiten auf die im Schritt 5 durchgeführte Trokkenreinigung wird auf die Fig. 3 und die zugehörige Beschreibung verwiesen. Daraufhin wird in einem Schritt 6 eine elektrostatische Abscheidung durchgeführt. Bei der elektrostatischen Abscheidung gemäß Schritt 6 werden die restlichen Fremd- und Störstoffe abgeschieden. Dabei handelt es sich insbesondere um Papier, Aluminiumfolie, Schmutz, Staub oder dergleichen. Ebenfalls werden auch Kunststoffteilchen abgeschieden, welche trotz der vorherigen Behandlungsschritte 1 bis 5 weiterhin verunreinigt sind. In dem Schritt 6 werden die Teilchen über eine Rüttelrinne einer oder mehreren Walzen zugeführt. Dabei sind die Walzen mit einer Hochspannung aufgeladen. Durch die Hochspannung werden Nicht-Kunststoffteilchen in Richtung einer geerdeten Platte angezogen und dort ausgeschieden. Die Kunststoffe verbleiben auf einer sich drehenden Walze und fallen am Ende dieses Vorgangs in einen Auffangbehälter. Durch die Einstellung der Stärke der Hochspannung und damit der entsprechenden Aufladung der Teilchen kann in der Ausscheidung eine stärkere beziehungsweise schwächere Beimischung von Kunststoffteilchen erzeugt werden. Insbesondere können dadurch die ausgeschiedenen Teilchen bereits zur Herstellung von minderwertigen Kunststoffprodukten, wie z. B. Pfosten oder Rasengittersteinen, verwendet werden. In einem darauffolgenden Schritt 7 wird die erfindungsgemäße kontaktelektrische Vorbehandlung der Kunststoffteilchen durchgeführt, wobei die eigentliche elektrostatische Trennung in einem Schritt 8 über einen Fallabscheider, welcher einen Plattenkondensator, der mit ca. 80 kV aufgeladen ist, aufweist, oder einen Walzenabscheider oder dergleichen durchgeführt wird. Je nach der Anzahl der zu trennenden Kunststoffarten bzw. dem Reinheitsgrad werden die Schritte 7 und/oder 8 ein- oder mehrmalig durchgeführt. Für weitere Einzelheiten des erfindungsgemäßen Verfahrens zur kontaktelektrischen Vorbehandlung gemäß Schritt 7 wird auf die Fig. 4 und 5 und die dazugehörige Beschreibung verwiesen.

Unter Bezugnahme auf die Fig. 2 wird im folgenden das erfindungsgemäße Anlagenteil zur Schwergutabscheidung gemäß Schritt 3 in Fig. 1 näher erläutert. In stark schematischer und vereinfachter Ansicht zeigt Fig. 2 ein im wesentlichen vertikal angeordnetes Fallrohr 10. An einem unteren Ende des Fallrohrs 10 ist ein Auffangbehälter 11 zum Sammeln des relativ schweren Schwerguts 12 vorgesehen. Die relativ schweren Teilchen beziehungsweise das Schwergut 12 ist in der Zeichnung durch Kügelchen dargestellt. Relativ leichte Teilchen bzw. Leichtgut 13 ist in der Zeichnung durch Punkte dargestellt. Die Wahl der Darstellung dient lediglich illustrativen Zwecken und gibt die tatsächliche Größenverteilung nicht wieder. Durch die Vorzerkleinerung im Schritt 1 besitzen nämlich alle Teilchen in etwa dieselbe Größe mit einem Durchmesser von etwa 20 Millimeter. Das Schwergut 12 und das Leichtgut 13 unterscheiden sich daher vornehmlich durch deren jeweilige Dichtebereiche bzw. deren Gewichtskraft. Das zu trennende Material, welches Schwergut 12 und Leichtgut 13 aufweist, wird über eine Zuleitung 14 dem Fallrohr 10 zugeführt. Eine weitere Zuleitung 15 ist zum Einlaß eines durch die Pfeile A dargestellte Gasstroms vorgesehen, wobei als Strömungsmittel vorzugsweise Luft verwendet wird. Die Zuleitung für den Luftstrom ist dabei schräg zu dem Fallrohr 10 und unterhalb der Zuleitung 14 angeordnet. Durch das Anblasen des Materials in dem Fallrohr 10 mit Luft von unten wird das Leichtgut 13, welches z. B. Kunststoffe enthält, nach oben beschleunigt und gelangt in einen (nicht dargestellten) Auffangbehälter zu deren Weiterverarbeitung gemäß den Schritten 4 bis 8. Das Schwergut 12 fällt gegen den Luftstrom nach unten in dem Fallrohr 10 und sammelt sich in dem Auffangbehälter 11 an. Eine technologische Besonderheit der in Fig. 2 dargestellten Vorrichtung bzw. des entsprechenden Verfahrens besteht darin, daß der durch die Pfeile A dargestellte Luftstrom einstellbar ist. Da alle Teilchen nach der im Schritt 1 durchgeführten Vorzerkleinerung in etwa die gleiche Größe besitzen, kann durch einen entsprechend eingestellten Luftstrom sichergestellt werden, daß das Leichtgut 13, welches am oberen Ende des Fallrohrs 10 gesammelt wird, nur Teilchen bis zu einer vorbestimmten maximalen Dichte, welche eine Funktion der Stärke des Luftstroms ist, aufweist. Die Einstellung des Luftstroms A dient somit einerseits dazu die Kunststoffteilchen aus dem Eingangsmaterial herauszufiltern und kann andererseits ebenso dazu verwendet werden, einen Vortrennung der Kunststoffarten selbst, welche sich insbesondere in der Dichte unterscheiden (vergleiche Fig. 5) verwendet werden.

In Zusammenhang mit den Fig. 3a und 3b, in welchen eine Querschnittsansicht bzw. einen Längsschnittsansicht einer Reinigungsvorrichtung dargestellt ist, wird im folgenden der Schritt 5 der Trockenreinigung (vergleiche Fig. 1) näher erläutert. Gemäß Fig. 1 wurde zwischen oben erläuterten Schritt 3 der Schwergutabscheidung vor dem Schritt 5 in Schritt 4 eine Feinmahlung durchgeführt, weshalb die nun zur Trockenreinigung anstehenden Kunststoffpartikel 22 eine Korngröße von wenigen Millimetern aufweisen. Der Querschnittsansicht der Fig. 3a entnimmt man, daß zur Reinigung einer sich im Betrieb drehende Rundbürste 20 vorgesehen ist. Die Rundbürste wird von einem im Querschnitt im wesentlichen U-förmig gebogenen Sieb 21 umspannt. Dabei ist die Rundbürste 20 in dem gebogenen Abschnitt 21a des Siebs 21 angeordnet und kontaktiert diesen. Der Krümmungsradius des gebogenen Abschnitts 21a entspricht im wesentlichen dem Radius der Rundbürste 20. Das Sieb 21 besitzt eine durchgehend konstante Maschenweite, welche in einem Bereich von etwa 0,2 Millimeter bis etwa 1 Millimeter liegt. Die Maschengröße des Siebes 21 bestimmt die Feinheit des ausgeschiedenen Schmutzes. Ferner wird die Maschengröße des Siebes 21 durch die Größe der Kunststoffpartikel bestimmt. Sind die Maschen des Siebes 21 zu groß, werden unerwünschter Weise auch Kunststoffpartikel 22 durch das Sieb 21 ausgeschieden. Wenn die Maschen des Siebs 21 zu klein sind, verbleiben Schmutz- bzw. Staubteilchen 23 im Prozeß. Die Staubpartikel 23 gelangen durch den von der Rundbürste 20 aufgeprägten Druck und die Schwerkraft durch die Maschen des Siebs 21 in einen Behälter 24. Der Drehsinn der Rundbürste 20 ist in Fig. 3a durch eine Pfeil angegeben. Oberhalb der Bürste 20 sind an dem Sieb Lamellen 25 befestigt, welche dafür sorgen, daß die Kunststoffpartikel 22 durch den Drehvorgang an der Bürste 20 in Richtung des Auslaßes 26 bewegen. Ein trichterförmiger Einlaß 27 ist auf der gegenüberliegenden Seite des Auslasses 26 vorgesehen. Durch den Einlaß 27 werden die Teilchen in die Anordnung durch deren Schwerkraft eingespeist. Alternativ zu oder anstelle von den Lamellen 25 kann die gesamte Anordnung vom Einlaß 27 zum Auslaß 26 (vergleiche Fig. 3b) entgegen der Darstellung in der Zeichnung auch geneigt sein, so daß der Transport der Teilchen 22 vom Einlaß 27 zum Auslaß 26 durch die Schwerkraft unterstützt wird. Es sei bemerkt, daß durch die Anordnung gemäß den Fig. 3a und 3b die Kunststoffpartikel 22 gesäubert werden und deren Oberfläche aufgerauht wird. Die Säuberung und das Aufrauhen hat sich als sehr vorteilhaft zur Vorbereitung der elektrostatischen Behandlung der nächsten Stufen erwiesen. Dies liegt insbesondere daran, daß manche Kunststoffe mit antistatischen Beschichtung versehen sind. Ferner wird durch das Aufrauhen die Oberfläche vergrößert. Eine gründliche Reinigung dient auch dazu, z. B. durch Öl oder Zucker, stark verschmutzte Oberflächen zu säubern. Durch die Anordnung der Fig. 3a und 3b wird ebenfalls sichergestellt, daß flüssige Stoffe, insbesondere Wasser, abgeschieden werden. Somit wird auch eine Trocknung des Materials erreicht. Vorzugsweise wird der Schritt der Trockenreinigung mehrfach durchgeführt.

In Zusammenhang mit Fig. 4 wird die erfindungsgemäße kontaktelektrische Vorbehandlung, welche für die eine Trennung vorbereitende, statische Aufladung der Kunststoffpartikel, welche wiederum in einem nachfolgenden Trennungsschritt ausgenutzt werden kann, sorgt, näher erläutert. Die Kunststoffpartikel 22 werden in eine Anordnung bzw. ein Trennwerkzeug eingespeist, welche hintereinander angeordnete walzenförmige Rundbürsten 31, welche von einer Schale 32 umgeben sind, aufweist. Die einzelnen Bürsten-/Schalen-Kombinationen 31, 32, von denen in Fig. 4 fünf dargestellt sind, sind jeweils über Passagen 33 verbunden. Durch den in der Zeichnung mit einem Pfeil angezeigten Drehsinn der Rundbürsten 31 werden die entsprechend aufgeladenen Kunststoffpartikel 22 einem Auslaß 35 zugeführt. Es sei bemerkt, daß die Rundbürsten 31 sowie die Schalen 32 vorzugsweise aus dem gleichen, vorbestimmten Kunststoffmaterial aufgebaut sind. Die Bürsten 31 kontaktieren die Schalen 32. Nachdem die Kunststoffpartikel 22 entsprechend aufgeladen werden, was im folgenden noch näher erläutert wird, gelangen sie durch den Auslaß 35 beispielsweise in einen im Stand der Technik bekannten Fallabscheider zur Trennung der Partikel nach deren Ladungsvorzeichen.

Ein wesentlicher Kerngedanke der vorliegenden Erfindung besteht in der Auswahl des vorbestimmten Kunststoffmaterials, aus welchem die Bürsten 31 und Schalen 32 hergestellt sind. Dazu wird auf die in Fig. 5 dargestellte Tabelle verwiesen, in deren ersten Spalte unterschiedliche Kunststoffarten zeilenweise angeordnet sind, wobei in einer zweiten Spalte deren Dichte in g/cm³, in einer dritten Spalte deren (relative) Permittivitätszahl bzw. die Dielektrizitätszahl εᵣ und in einer vierten Spalte die Differenz zwischen der Dielektrizitätszahl εᵣ minus die Dichte in g/cm³ angegeben ist. Die in der Tabelle der Fig. 5 verwendeten Abkürzungen für die verschiedenen Kunststoffsorten sind einem Fachmann geläufig. Die Aufstellung der Kunststoffarten ist nicht abschließend und die zugehörigen Materialkonstanten können aus Tabellenwerken bzw. durch Experimente vom Fachmann leicht ergänzt werden. Insbesondere können anstelle von einer Tabelle auch mehrere gleichartige Tabellen verwendet werden, welche entsprechende Abhängigkeiten, wie z. B. die Abhängigkeit von εᵣ von der Luftfeuchtigkeit oder Temperatur, berücksichtigen. Die speziell aufgelisteten Kunststoffarten sind aber im Hinblick auf deren Häufigkeit zur Wiederaufbereitung bzw. auch durch deren vorteilhafte Verwendung in Verbindung mit dem erfindungsgemäßen Verfahren bevorzugt.

Durch Versuche wurde beispielsweise herausgefunden, daß alle Bürsten-/Schalen-Kombinationen aus PE-HD Kunststoffpartikel 22 aus PS positiv aufladen. Dagegen werden Kunststoffpartikel aus PE-LD negativ aufgeladen. Eine Bürsten-/Schalen-Kombination aus PE-LD lädt Kunststoffpartikel 22 aus PS ebenfalls positiv auf. Kunststoffpartikel 22, welche aus PA bestehen, werden fast immer positiv aufgeladen. Ferner werden Kunststoffpartikel, welche aus PVC-U (hart) bestehen, fast immer negativ aufgeladen. Keine Aufladung findet bei Partikeln 22 aus dem Bürstenmaterial PE-LD statt. Allgemein wurde herausgefunden, daß mit einer Bürsten-/Schalen-Kombination 31, 32 aus PE-LD alle Kunststoffe, deren Kennzahl gebildet aus relativer Permittivitätszahl minus Dichte in g/cm³ kleiner als derjenige von PE-LD ist (in der Tabelle der Fig. 5 oberhalb von PE-LD), negativ aufgeladen werden. Umgekehrt werden Partikel aus allen Kunststoffen, deren Wert von relativer Permittivitätszahl minus spezifischer Dichte in g/cm³ größer als derjenige von PE-LD ist (in der Tabelle der Fig. 5 unterhalb von PE-LD), positiv aufgeladen. Man entnimmt daher der vierten Spalte der Tabelle der Fig. 5, welche den numerischen Wert der relativen Permittivitätszahl minus der Dichte in g/cm³ angibt, eine Wertigkeitsliste oder sozusagen eine "Triboelektrische Spannungsreihe". Aus dieser Spannungsreihe kann insbesondere für die angegebenen Kunststoffarten, aber auch für alle anderen Kunststoffe, deren relative Permittivitätszahl und die Dichte bekannt sind, die Aufladung nach der kontaktelektrischen Vorbehandlung des Schritts 7 in Abhängigkeit von der, insbesondere für die Bürsten-/Schalen-Kombination 31, 32 verwendeten, vorbestimmten Kunststoffart vorhergesagt werden. So werden alle gemäß Spalte 4 der Tabelle der Fig. 5 oberhalb der vorbestimmten Kunststoffart aufgelisteten Kunststoffe (mit kleinerer Kennzahl gebildet aus Dielektrizitätszahl εᵣ minus Dichte in g/cm³) negativ aufgeladen. Alle unterhalb der vorbestimmten Kunststoffart in Spalte 4 der Fig. 5 (mit größerer Kennzahl gebildet aus Dielektrizitätszahl εᵣ minus Dichte in g/cm³), welche eventuell durch weitere Kunststoffarten ergänzt wurde, angeordneten Kunststoffe werden negativ aufgeladen. Es ist klar, daß eine mehrfache Durchführung der kontaktelektrischen Vorbehandlung gemäß Schritt 7 mit oder ohne Durchführung des eigentlichen Trennschritts 8, insbesondere verbunden mit einer Neutralisation der Partikel 22, für eine verbesserte Trennung, daß heißt einen entsprechenden höheren Reinheitsgrad sorgt. Durch das oben erläuterte Verfahren können insbesondere Kunststoffe gut getrennt werden, welche sich im Hinblick auf ihre relative Permittivitätszahl nur wenig aber durch ihre Dichte ausreichend voneinander unterscheiden. Durch die Verwendung einer Bürsten-/Schalen-Kombination 31, 32 können daher die Kunststoffpartikel 22 in drei unterscheidbare Gruppen durch das sich durch die Vorbehandlung ergebende Ladungsvorzeichen der elektrostatischen Aufladung geteilt werden. Für die sinnvolle Anwendung der vorliegenden Erfindung sollte die Zusammensetzung des Eingangsmaterials berücksichtigt werden. Vorzugsweise werden Bürsten-/Schalen-Kombinationen 31, 32 aus jeweils dem gleichen, aber in der Anordnung aufeinanderfolgend, aus unterschiedlichen vorbestimmten Kunststoffen verwendet, um gerade diese Kunststoffsorten aus dem Eingangsmaterial herauszufiltern. Die Anzahl und die Art der unterschiedlichen Stufen wird dabei insbesondere von der Zusammensetzung des Eingangsmaterials aber auch von dem Aufwand und der geforderten Reinheit abhängen. Zur Planung einer entsprechenden Anlage sind daher statistische Informationen über die Zusammensetzung des Eingangsmaterials vorteilhaft. Diese können auch dazu verwendet werden, die Anzahl der Verfahrensschritte, insbesondere die Anzahl der Bürsten/Schalen-Kombinationen 31, 32, sowie deren Materialauswahl, zu bestimmen.

Die Erfindung wurde zuvor anhand von bevorzugten Ausführungsformen derselben näher erläutert. Für einen Fachmann ist es jedoch offensichtlich, daß unterschiedliche Abwandlungen und Modifikationen gemacht werden können, ohne den der Erfindung zugrundeliegenden Kerngedanken zu verlassen. Für die kontaktelektische Vorbehandlung kann irgendeine beliebige Kunststoffart verwendet werden, wobei die resultierende statische Aufladung eines Kunststoffgemisches nach einer Kennzahl vorhergesagt werden kann, welche insbesondere die Dichte der in dem Gemisch enthaltenen Kunststoffarten berücksichtigt.

Zusammenfassend sieht die Erfindung insbesondere folgendes vor:
1. Verfahren zum Trennen eines Kunststoffgemisches, welches eine Vielzahl unterschiedlicher Kunststoffarten aufweist, durch eine kontaktelektrische Vorbehandlung, dadurch gekennzeichnet, daß eine vorbestimmte Kunststoffart mit dem Kunststoffgemisch in Kontakt gebracht wird, wobei das Kunststoffgemisch derart behandelt wird, das eine erste Gruppe von Kunststoffen des Kunststoffgemisches im wesentlichen positiv aufgeladen wird, eine zweite Gruppe von Kunststoffen des Kunststoffgemisches im wesentlichen negativ aufgeladen wird und eine dritte Gruppe von Kunststoffen des Kunststoffgemisches im wesentlichen ungeladen ist, wobei die dritte Gruppe von Kunststoffen im wesentlichen die vorbestimmte Kunststoffart aufweist.
2. Verfahren nach Punkt 1, dadurch gekennzeichnet, daß zur Auswertung der ersten und zweiten Gruppen von Kunststoffen eine Wertetabelle vorgesehen ist, welche in Abhängigkeit von der vorbestimmten Kunststoffart, diejenigen Kunststoffarten, welche sich durch die Vorbehandlung im wesentlichen positiv aufladen, und diejenigen Kunststoffarten, welche sich durch die Vorbehandlung im wesentlichen negativ aufladen, aufweist.
3. Verfahren nach Punkt 2, dadurch gekennzeichnet, daß die Wertetabelle als Rangordnung ausgebildet ist, welche die Kunststoffarten nach einer Wertigkeitsfunktion anordnet, wobei die Wertigkeitsfunktion die relative Permittivitätszahl und die Dichte aufweist.
4. Verfahren nach Punkt 3, dadurch gekennzeichnet, daß die Wertigkeitsfunktion die relative Permittivitätszahl minus die Dichte in g/cm³ ist.
5. Verfahren nach Punkt 4, dadurch gekennzeichnet, daß sich diejenigen Kunststoffarten durch die Vorbehandlung im wesentlichen negativ aufladen, deren Kennzahl gebildet aus relativer Permittivitätszahl minus die Dichte in g/cm³ kleiner als der entsprechende Wert der vorbestimmten Kunststoffart ist, und sich diejenigen Kunststoffarten durch die Vorbehandlung im wesentlichen positiv aufladen, deren Kennzahl gebildet aus relativer Permittivitätszahl minus die Dichte in g/cm³ größer als der entsprechende Wert der vorbestimmten Kunststoffart ist.
6. Verfahren nach einem der vorhergehenden Punkte, dadurch gekennzeichnet, daß das Verfahren mehrfach mit der gleichen vorbestimmten Kunststoffart durchgeführt wird.
7. Verfahren nach einem der vorhergehenden Punkte, dadurch gekennzeichnet, daß das Verfahren mehrfach mit unterschiedlichen vorbestimmten Kunststoffarten durchgeführt wird.
8. Verfahren nach einem der vorhergehenden Punkte, dadurch gekennzeichnet, daß das Kunststoffgemisch gemahlene Teilchen mit Korngrößen von wenigen Millimetern aufweist.
9. Verfahren nach einem der vorhergehenden Punkte, dadurch gekennzeichnet, daß das Kunststoffgemisch vor der kontaktelektrischen Behandlung gebürstet wird.
10. Verfahren nach einem der vorhergehenden Punkte, dadurch gekennzeichnet, daß das Kunststoffgemisch vor der kontaktelektrischen Behandlung getrocknet wird.
11. Vorrichtung zum Trennen eines Kunststoffgemisches, welches eine Vielzahl unterschiedlicher Kunststoffarten aufweist, durch eine kontaktelektrische Vorbehandlung, insbesondere zur Durchführung eines Verfahrens nach einem der vorgehenden Punkte, dadurch gekennzeichnet, daß eine vorbestimmte Kunststoffart mit dem Kunststoffgemisch in Kontakt gebracht wird, wobei das Kunststoffgemisch derart behandelt wird, daß eine erste Gruppe von Kunststoffen des Kunststoffgemisches im wesentlichen positiv aufgeladen wird, eine zweite Gruppe von Kunststoffen des Kunststoffgemisches im wesentlichen negativ aufgeladen wird, und eine dritte Gruppe von Kunststoffen des Kunststoffgemisches im wesentlichen ungeladen ist, wobei die dritte Gruppe von Kunststoffen im wesentlichen die vorbestimmte Kunststoffart aufweist.
12. Vorrichtung nach Punkt 11, dadurch gekennzeichnet, daß die Vorrichtung wenigstens eine Anordnung aus einer in einer Schale angeordneten Bürsteinrichtung aufweist, wobei die Schale und die Bürsteinrichtung aus der vorbestimmten Kunststoffart hergestellt ist.
13. Verfahren zum Trennen eines Stoffgemisches, welches Teilchen unterschiedlicher Masse aufweist, dadurch gekennzeichnet, daß das Stoffgemisch in einem im wesentlichen vertikalen Fallrohr gegen einen einstellbaren Strom eines Strömungsmittels fällt, wobei der Strom des Strömungsmittels derart einstellbar ist, daß relativ schwere Teilchen gegen den Strom nach unten fallen und relativ leichte Teilchen durch den Strom nach oben abgesondert werden.
14. Verfahren nach Punkt 13, dadurch gekennzeichnet, daß die Teilchen alle in etwa die gleiche Größe besitzen.
15. Verfahren nach Punkt 13 oder 14, dadurch gekennzeichnet, daß das Verfahren zur Schwergutabscheidung in einer Mülltrennungsanlage insbesondere zur Kunststoffwiederaufbereitung, eingesetzt wird.
16. Vorrichtung zum Trennen eines Stoffgemisches, welches Teilchen unterschiedlicher Masse aufweist, insbesondere zur Durchführung des Verfahrens nach einem der Punkte 13 bis 15, gekennzeichnet durch ein im wesentlichen vertikales Fallrohr, in welchem das Stoffgemisch gegen einen einstellbaren Strom eines Strömungsmittels fällt, wobei der Strom derart eingestellt ist, daß relativ schwere Teilchen gegen den Strom nach unten fallen und relativ leichte Teilchen durch den Strom nach oben abgesondert werden.
17. Vorrichtung nach Punkt 16, dadurch gekennzeichnet, daß in einem unteren und oberen Bereich des Fallrohrs jeweils ein Auffangbehälter angeordnet ist.
18. Vorrichtung nach Punkt 16 oder 17, dadurch gekennzeichnet, daß die Vorrichtung zwei Zuleitungen zu dem Fallrohr aufweist, wobei eine Zuleitung zur Zuführung des Stoffgemisches und die weitere Zuleitung zum Liefern des Strömungsmittels vorgesehen ist.
19. Verfahren zur Trockenreinigung eines Stoffgemisches, welches Feststoffe und Weichstoffe aufweist, dadurch gekennzeichnet, daß das Stoffgemisch von einer Bürsteinrichtung, welche zumindest teilweise von Siebeinrichtung umgeben ist, gereinigt wird, wobei im wesentlichen die Weichstoffe durch die Siebeinrichtung abgesondert werden.
20. Vorrichtung zur Trockenreinigung eines Stoffgemisches, welches Feststoffe und Weichstoffe aufweist, insbesondere zur Durchführung des Verfahrens nach Punkt 19, gekennzeichnet durch eine Bürsteinrichtung und Siebeinrichtung, welche zumindest teilweise die Bürsteinrichtung umgibt, wobei das Stoffgemisch durch die Bürsteinrichtung gereinigt und aufgerauht wird, und wobei die Weichstoffe durch die Siebeinrichtung abgesondert werden.
21. Vorrichtung nach Punkt 20, dadurch gekennzeichnet, daß die Bürsteneinrichtung als drehbare Walze ausgebildet ist.
22. Vorrichtung nach Punkt 20 oder 21, dadurch gekennzeichnet, daß die Siebeinrichtung im Querschnitt im wesentlichen ein U-förmig gebogenes Gitter ist, wobei der Krümmungsradius des Gitters im gebogenen Bereich in etwa dem Radius der Bürsteinrichtung entspricht.
23. Vorrichtung nach einem der Punkte 20 bis 22, dadurch gekennzeichnet, daß ein Einlaß für das Stoffgemisch im wesentlichen an einer Querseite und oberhalb der Bürsteinrichtung vorgesehen ist.
24. Vorrichtung nach einem der Punkte 20 bis 23, dadurch gekennzeichnet, daß ein Auslaß auf der dem Einlaß gegenüberliegenden Querseite der Bürsteinrichtung vorgesehen ist.
25. Vorrichtung nach einem der Punkte 20 bis 24, dadurch gekennzeichnet, daß die Vorrichtung vom Einlaß zum Auslaß hin nach unten geneigt ist.
26. Vorrichtung nach einem der Punkte 20 bis 25, dadurch gekennzeichnet, daß oberhalb der Bürsteinrichtung zwischen den Schenkeln der Siebeinrichtung schräg verlaufende Lamellen angeordnet sind.
27. Anlage zur Kunststoffwiedergewinnung unter Verwendung einer Vorrichtung und eines Verfahrens nach einem der vorhergehenden Punkte.

## Patentansprüche

1. Verfahren zum Trennen eines Kunststoffgemisches, welches eine Vielzahl unterschiedlicher Kunststoffarten aufweist, durch eine kontaktelektrische Vorbehandlung, **dadurch gekennzeichnet, daß** eine vorbestimmte Kunststoffart mit dem Kunststoffgemisch in Kontakt gebracht wird, wobei das Kunststoffgemisch derart behandelt wird, das eine erste Gruppe von Kunststoffen des Kunststoffgemisches im wesentlichen positiv aufgeladen wird, eine zweite Gruppe von Kunststoffen des Kunststoffgemisches im wesentlichen negativ aufgeladen wird und eine dritte Gruppe von Kunststoffen des Kunststoffgemisches im wesentlichen ungeladen ist, wobei die dritte Gruppe von Kunststoffen im wesentlichen die vorbestimmte Kunststoffart aufweist.

2. Verfahren nach Anspruch 1, **dadurch gekennzeichnet, daß** ein Trennwerkzeug zur Trennung von Teilchen des Kunststoffgemisches vorgesehen ist, wobei das Trennwerkzeug aus der vorbestimmten Kunststoffart hergestellt ist.

3. Verfahren nach Anspruch 2, **dadurch gekennzeichnet, daß** die Oberfläche des Trennwerkzeugs, welches mit den Teilchen des Kunststoffs in Kontakt gebracht wird, groß im Vergleich zu der Oberfläche eines Teilchens des Kunststoffgemisches ist.

4. Verfahren nach einem der vorhergehenden Ansprüche, **dadurch gekennzeichnet, daß** zur Auswertung der ersten und zweiten Gruppen von Kunststoffen eine Wertetabelle vorgesehen ist, welche in Abhängigkeit von der vorbestimmten Kunststoffart, diejenigen Kunststoffarten, welche sich durch die Vorbehandlung im wesentlichen positiv aufladen, und diejenigen Kunststoffarten, welche sich durch die Vorbehandlung im wesentlichen negativ aufladen, aufweist.

5. Verfahren nach Anspruch 4, **dadurch gekennzeichnet, daß** die Wertetabelle als Rangordnung ausgebildet ist, welche die Kunststoffarten nach einer Wertigkeitsfunktion anordnet, wobei die Wertigkeitsfunktion die relative Permittivitätszahl und die Dichte aufweist.

6. Verfahren nach Anspruch 5, **dadurch gekennzeichnet, daß** die Wertigkeitsfunktion die relative Permittivitätszahl minus die Dichte in g/cm³ ist.

7. Verfahren nach Anspruch 6, **dadurch gekennzeichnet, daß** sich diejenigen Kunststoffarten durch die Vorbehandlung im wesentlichen negativ aufladen, deren Kennzahl gebildet aus relativer Permittivitätszahl minus die Dichte in g/cm³ kleiner als der entsprechende Wert der vorbestimmten Kunststoffart ist, und sich diejenigen Kunststoffarten durch die Vorbehandlung im wesentlichen positiv aufladen, deren Kennzahl gebildet aus relativer Permittivitätszahl minus die Dichte in g/cm³ größer als der entsprechende Wert der vorbestimmten Kunststoffart ist.

8. Verfahren nach einem der vorhergehenden Ansprüche, **dadurch gekennzeichnet, daß** das Verfahren mehrfach mit der gleichen vorbestimmten Kunststoffart durchgeführt wird.

9. Verfahren nach einem der vorhergehenden Ansprüche, **dadurch gekennzeichnet, daß** das Verfahren mehrfach mit unterschiedlichen vorbestimmten Kunststoffarten durchgeführt wird.

10. Verfahren nach einem der vorhergehenden Ansprüche, **dadurch gekennzeichnet, daß** das Kunststoffgemisch gemahlene Teilchen mit Korngrößen von wenigen Millimetern aufweist.

11. Verfahren nach einem der vorhergehenden Ansprüche, **dadurch gekennzeichnet, daß** das Kunststoffgemisch vor der kontaktelektrischen Behandlung gebürstet wird.

12. Verfahren nach einem der vorhergehenden Ansprüche, **dadurch gekennzeichnet, daß** das Kunststoffgemisch vor der kontaktelektrischen Behandlung getrocknet wird.

13. Vorrichtung zum Trennen eines Kunststoffgemisches, welches eine Vielzahl unterschiedlicher Kunststoffarten aufweist, durch eine kontaktelektrische Vorbehandlung, insbesondere zur Durchführung eines Verfahrens nach einem der vorgehenden Ansprüche, **dadurch gekennzeichnet, daß** eine vorbestimmte Kunststoffart mit dem Kunststoffgemisch in Kontakt gebracht wird, wobei das Kunststoffgemisch derart behandelt wird, daß eine erste Gruppe von Kunststoffen des Kunststoffgemisches im wesentlichen positiv aufgeladen wird, eine zweite Gruppe von Kunststoffen des Kunststoffgemisches im wesentlichen negativ aufgeladen wird, und eine dritte Gruppe von Kunststoffen des Kunststoffgemisches im wesentlichen ungeladen ist, wobei die dritte Gruppe von Kunststoffen im wesentlichen die vorbestimmte Kunststoffart aufweist.

14. Vorrichtung nach Anspruch 13, **dadurch gekennzeichnet, daß** ein Trennwerkzeug zur Trennung von Teilchen des Kunststoffgemisches vorgesehen ist, wobei das Trennwerkzeug aus der vorbestimmten Kunststoffart hergestellt ist.

15. Vorrichtung nach Anspruch 14, **dadurch gekennzeichnet, daß** die Oberfläche des Trennwerkzeugs, welches mit den Teilchen des Kunststoffs in Kontakt gebracht wird, groß im Vergleich zu der Oberfläche eines Teilchens des Kunststoffgemisches ist.

16. Vorrichtung nach Anspruch 14 oder 15, **dadurch gekennzeichnet, daß** das Trennwerkzeug wenigstens eine Anordnung aus einer in einer Schale angeordneten oder aufgenommenen Bürsteinrichtung aufweist, wobei die Schale und die Bürsteinrichtung aus der vorbestimmten Kunststoffart hergestellt sind.

17. Vorrichtung nach Anspruch 14 oder 15, **dadurch gekennzeichnet, daß** das Trennwerkzeug wenigstens eine Anordnung aus einer in einer Schale angeordneten Bürsteinrichtung aufweist, wobei die Schale und die Bürsteinrichtung aus unterschiedlichen Kunststoffarten hergestellt sind.

18. Vorrichtung nach Anspruch 17, **dadurch gekennzeichnet, daß,** insbesondere zur Trennung von Teilchen eines Kunststoffgemisches aus HDPE und PET, die Schale aus PA und die Bürsteinrichtung aus PVC hergestellt ist.

19. Anlage zur Kunststoffwiedergewinnung unter Verwendung einer Vorrichtung und eines Verfahrens nach einem der vorhergehenden Ansprüche.

## Claims

1. Process for the separation of a plastic mixture containing numerous different types of plastic by an electrical contact pre-treatment, **characterized by the fact that** a pre-determined type of plastic will be brought in contact with the plastic mixture, with the plastic mixture being treated in such a way that a first group of material in the plastic mixture will be charged mainly positively, a second one mainly negatively and a third one will remain largely uncharged, with the third group of plastic material largely consisting of the pre-determined type of plastic.

2. Process in accordance with claim 1, **characterized by the fact that** a separating tool for separating the particles of the plastic mixture will be employed that is made of the pre-determined type of plastic.

3. Process in accordance with claim 2, **characterized by the fact that** the surface of the separating tool which will be brought in contact with the particles of the plastic mixture is large in comparison with the surface of the particles of the plastic mixture.

4. Process in accordance with any one of the above claims, **characterized by the fact that** a table of values will be used for assessing the first and second groups of plastic, in which those types of plastic are listed which will be charged mainly positively as a result of the pre-treatment and those which will be charged mainly negatively as a result of the pre-treatment, depending in each case on the pre-determined type of plastic.

5. Process in accordance with claim 4, **characterized by the fact that** the table of values is arranged in a ranking order. The types of plastic are listed on the basis of their ranking function, with the ranking function showing the relative permittivity and the density.

6. Process in accordance with claim 5, **characterized by the fact that** the ranking function represents the relative permittivity minus the density in g/cm³.

7. Process in accordance with claim 6, **characterized by the fact that** that the types of plastic are charged mainly negatively as a result of the pre-treatment when their characteristic value calculated by deducting the density in g/cm³ from the relative permittivity is smaller than the corresponding value of the pre-determined type of plastic and that the types of plastic are charged mainly positively as a result of the pre-treatment when their characteristic value calculated by deducting the density in g/cm³ from the relative permittivity is larger than the corresponding value of the pre-determined type of plastic.

8. Process in accordance with any one of the above claims, **characterized by the fact that** the process will be run several times with the same pre-determined type of plastic.

9. Process in accordance with any one of the above claims, **characterized by the fact that** the process will be run several times with different pre-determined types of plastic.

10. Process in accordance with any one of the above claims, **characterized by the fact that** the plastic mixture consists of ground particles with a grain size of a few millimeters only.

11. Process in accordance with any one of the above claims, **characterized by the fact that** the plastic mixture will be brushed before the electrostatic treatment.

12. Process in accordance with any of the above claims, **characterized by the fact that** the plastic mixture will be dried before the electrostatic treatment.

13. Device for the separation of a plastic mixture consisting of numerous different types of plastic by an electrical contact pre-treatment, especially for running a process in accordance with any one of the above claims, **characterized by** bringing a pre-determined type of plastic in contact with the plastic mixture, with the plastic mixture being treated in such a way that a first group of material contained in the plastic mixture will be charged mainly positively, a second one mainly negatively and a third one will remain largely uncharged, with the third group of plastic material mainly consisting of the pre-determined type of plastic.

14. Device in accordance with claim 13, **characterized by the fact that** the separating tool for the separation of particles contained in a plastic mixture is made of the pre-determined type of plastic.

15. Device in accordance with claim 14, **characterized by the fact that** the surface of the separating tool which will be brought in contact with the particles of the plastic mixture is large in comparison with the surface of a particle contained in the plastic mixture.

16. Device in accordance with claim 14 or 15, **characterized by the fact that** the separating tool consists of a brushing device located or resting in a tray, with both the tray and the brushing device being made from the pre-determined type of plastic.

17. Device in accordance with claim 14 or 15, **characterized by the fact that** the separating tool consists of a brushing device located in a tray, with both the tray and the brushing device being made from different types of plastic.

18. Device in accordance with claim 17, **characterized by the fact that** the tray is made of PA and the brushing device of PVC, when they are used especially for the separation of particles contained in a plastic mixture consisting of HDPE and PET.

19. Plastic recycling plant employing a device or based on a process in accordance with one of the above claims.

## Revendications

1. Procédé destiné à séparer un mélange de plastiques, qui présente une multitude de types de plastique différents, par un prétraitement électrique par contact, **caractérisé en ce qu'**un type de plastique prédéterminé est mis en contact avec le mélange de plastiques, le mélange de plastiques étant traité de telle sorte qu'un premier groupe de plastiques du mélange de plastiques est chargé pour l'essentiel positivement, un deuxième groupe de plastiques du mélange de plastiques est chargé pour l'essentiel positivement, et un troisième groupe de plastiques du mélange de plastiques est pour l'essentiel non chargé, le troisième groupe de plastiques présentant pour l'essentiel le type de plastique déterminé.

2. Procédé selon la revendication 1, **caractérisé en ce qu'**un outil de séparation destiné à la séparation de particules du mélange de plastiques est prévu, l'outil de séparation étant fabriqué à partir du type de plastique prédéterminé.

3. Procédé selon la revendication 2, **caractérisé en ce que** la surface de l'outil de séparation, qui est mise en contact avec les particules du plastique, est grande en comparaison avec la surface d'une particule du mélange de plastiques.

4. Procédé selon l'une des revendications précédentes, **caractérisé en ce qu'**un tableau de valeurs est prévu pour évaluer le premier et deuxième groupe de plastiques, tableau présentant, en fonction du type de plastique prédéfini, les types de plastiques qui se chargent pour l'essentiel positivement par le prétraitement, et les types de plastiques qui se chargent pour l'essentiel négativement par le prétraitement.

5. Procédé selon la revendication 4, **caractérisé en ce que** le tableau de valeurs est conçu sous forme d'échelle qui ordonne les types de plastique selon une fonction de valence, celle-ci présentant l'indice de permittivité relatif et la densité.

6. Procédé selon la revendication 5, **caractérisé en ce que** la fonction de valence est l'indice de permittivité relatif moins la densité exprimée en g/cm³.

7. Procédé selon la revendication 6, **caractérisé en ce que** les types de plastique qui se chargent pour l'essentiel négativement par le prétraitement sont ceux dont l'indice formé à partir de l'indice de permittivité relatif moins la densité exprimée en g/cm³ est inférieur à la valeur correspondante du type de plastique prédéterminé; et les types de plastique qui se chargent pour l'essentiel positivement par le prétraitement sont ceux dont l'indice formé à partir de l'indice de permittivité moins la densité exprimée en g/cm³est supérieur à la valeur correspondante du type de plastique prédéterminé.

8. Procédé selon l'une des revendications précédentes, **caractérisé en ce que** le procédé est réalisé plusieurs fois avec le même type de plastique prédéfini.

9. Procédé selon l'une des revendications précédentes, **caractérisé en ce que** le procédé est réalisé plusieurs fois avec différents types de plastique prédéterminés.

10. Procédé selon l'une des revendications précédentes, **caractérisé en ce que** le mélange de plastiques présente des particules moulus avec des granulométries de quelques millimètres.

11. Procédé selon l'une des revendications précédentes, **caractérisé en ce que** le mélange de plastiques est brossé avant le traitement électrique par contact.

12. Procédé selon l'une des revendications précédentes, **caractérisé en ce que** le mélange de plastiques est séché avant le traitement électrique par contact.

13. Dispositif destiné à séparer un mélange de plastiques, qui présente une multitude de types de plastique différents, par un prétraitement électrique par contact, destiné en particulier à mettre en oeuvre un procédé selon l'une des revendications précédentes, **caractérisé en ce qu'**un type de plastique prédéterminé est mis en contact avec le mélange de plastiques, le mélange de plastiques étant traité de telle sorte qu'un premier groupe de plastiques du mélange de plastiques est chargé pour l'essentiel positivement, un deuxième groupe de plastiques du mélange de plastiques est chargé pour l'essentiel positivement, et un troisième groupe de plastiques du mélange de plastiques est pour l'essentiel non chargé, le troisième groupe de plastiques présentant pour l'essentiel le type de plastique déterminé.

14. Dispositif selon la revendication 13, **caractérisé en ce qu'**un outil de séparation destiné à la séparation de particules du mélange de plastiques est prévu, l'outil de séparation étant fabriqué à partir du type de plastique prédéterminé.

15. Dispositif selon la revendication 14, **caractérisé en ce que** la surface dé l'outil de séparation, qui est mise en contact avec les particules du plastique, est grande en comparaison avec la surface d'une particule du mélange de plastiques.

16. Dispositif selon la revendication 14 ou 15, **caractérisé en ce que** l'outil de séparation présente au moins un agencement fait d'une brosse disposée ou abritée dans une coupe, la dite coupe et la brosse étant fabriquées dans le type de plastique prédéterminé.

17. Dispositif selon la revendication 14, **caractérisé en ce que** l'outil de séparation présente au moins un agencement fait d'une brosse disposée ou abritée dans une coupe, la dite coupe et la brosse étant fabriquées dans des types de plastique différents.

18. Dispositif selon la revendication 17, **caractérisé en ce que** la coupe est fabriquée en PA et la brosse en PVC, en particulier pour la séparation de particules d'un mélangé de plastiques en HDPE et PET.

19. Installation destinée à la récupération en utilisant un dispositif et un procédé selon l'une des revendications précédentes.
